(19) Europäisches Patentamt

European Patent Office

Office européen des brevets

(11) Veröffentlichungsnummer: **0 151 791**
**B1**

(12) **EUROPÄISCHE PATENTSCHRIFT**

(45) Veröffentlichungstag der Patentschrift:
**26.10.88**

(21) Anmeldenummer: **84116182.1**

(22) Anmeldetag: **22.12.84**

(51) Int. Cl.⁴: **B 23 B 31/04**, B 23 B 31/12

(54) Spannfutter, insbesondere Bohrfutter.

(30) Priorität: **16.02.84 DE 3405511**

(43) Veröffentlichungstag der Anmeldung:
**21.08.85 Patentblatt 85/34**

(45) Bekanntmachung des Hinweises auf die Patenterteilung:
**26.10.88 Patentblatt 88/43**

(84) Benannte Vertragsstaaten:
**CH FR GB IT LI**

(56) Entgegenhaltungen:
**DE - A - 2 806 797**
**DE - A - 2 847 927**
**DE - U - 7 910 976**

(73) Patentinhaber: **Röhm, Günter Horst,**
**Heinrich-Röhm-Strasse 50, D-7927 Sontheim (DE)**

(72) Erfinder: **Röhm, Günter Horst,**
**Heinrich-Röhm-Strasse 50, D-7927 Sontheim (DE)**

(74) Vertreter: **Fay, Hermann, Dipl.-Phys. Dr. et al,**
**Ensingerstrasse 21 Postfach 1767, D-7900 Ulm (Donau)**
**(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Die Erfindung betrifft ein Spannfutter, insbes. Bohrfutter mit einem Futterkörper, einer daran verdrehbar geführten koaxialen Spannhülse, mit Spannbacken, die zum Spannen und Lösen durch eine Relativdrehung zwischen dem Futterkörper und der Spannhülse verstellbar sind, und mit einer zwischen dem Futterkörper und der Spannhülse vorgesehenen Sperreinrichtung aus einem zur Futterachse koaxialen Zahnkranz einerseits und einem unter der Kraft einer Feder in den Zahnkranz eingreifenden Sperrglied andererseits, das den Futterkörper und die Spannhülse gegen Relativdrehungen im Sinne eines Lösens der Spannbacken sperrt, Relativdrehungen im Sinne eines Spannens aber unbehindert lässt, und das durch eine Löseeinrichtung von aussen in eine mit dem Zahnkranz nicht im Eingriff stehende Stellung verstellbar ist.

Ein derartiges Spannfutter ist aus der DE-OS 2 847 927 bekannt. Bei ihm ist das Feststellglied ein mit seiner Längsachse etwa senkrecht und exzentrisch zur Futterachse angeordneter, in Längsrichtung unter der Kraft der Feder verschiebbar im Futterkörper geführter Sperrstift, der, auf den Futterkörper bezogen, von innen nach aussen in den an der inneren Umfangsfläche der Spannhülse angeordneten Zahnkranz gedrückt wird. Dabei greift der Sperrstift mit einer von seiner Stirnfläche und seiner Umfangsfläche gebildeten Kante in die Verzahnung des Zahnkranzes, der dem Ende des Sperrstiftes mit zwei jeweils benachbarten Zahnflanken anliegt, von welchen, gesehen in der dem Spannen des Futters entsprechenden Drehrichtung des Zahnkranzes, die vorlaufende Zahnflanke an der Umfangsfläche, die nachlaufende Zahnflanke an der Stirnseite des Sperrstiftes anliegt. Die nachlaufende Zahnflanke beaufschlagt daher den Sperrstift in seiner Führungsrichtung und kann somit beim Verdrehen der Spannhülse im Sinne eines Spannens des Futters den Sperrstift unter Zurückdrücken gegen seine Feder passieren, so dass in dieser Drehrichtung die Spannhülse durch den Sperrstift nicht behindert wird. Die entgegengesetzte Drehrichtung ist dagegen durch die dem Sperrstift umfangsseitig anliegende andere Zahnflanke gesperrt, da sie den Sperrstift quer zu seiner Führungsrichtung beaufschlagt und ihn daher nicht aus dem Eingriff im Zahnkranz zurückdrücken kann. Die das Lösen des Futters ermöglichende Löseeinrichtung besteht bei dem bekannten Spannfutter aus einem ebenfalls koaxial am Futterkörper drehbar geführten Lösering, der beim Verdrehen das Ende des Sperrstiftes aus seinem Eingriff im Zahnkranz herausheben und dadurch die beliebige Verdrehung der Spannhülse in beiden Drehrichtungen freigeben kann.

Derartige Spannfutter haben sich vielfach bewährt und sind gegen ein selbsttätiges Lösen wirksam geschützt. Haben allerdings die Spannbacken die Möglichkeit, sich unter der Wirkung der am eingespannten Werkzeug oder Werkstück auftretenden Kräfte tiefer in das Werkzeug oder das Werkstück einzudrücken, macht dies sich als Lockerung der Einspannung bemerkbar. Zwar ist dann die Nachspaltung und auch die Sicherung des nachgespannten neuen Zustandes durch die Sperreinrichtung möglich, jedoch kann dabei, da die Nachspannung nur durch das Werkzeug oder das Werkstück selbst begrenzt ist, nicht ausgeschlossen werden, dass sich infolge wiederholten Nachspannens die Spannbacken tiefer und tiefer in das Werkzeug oder Werkstück einarbeiten. In manchen Fällen bestehen zwar an sich keine Bedenken gegen ein Eindringen der Spannbacken, jedoch wäre es oft erwünscht, diesen Vorgang jedenfalls begrenzen zu können, um ein unnötig tiefes Eindringen und damit nachteilige Beeinträchtigungen bzw. Beschädigungen des Werkzeugs oder Werkstücks nach Möglichkeit zu vermeiden. Dies gilt vor allem für Bohrfutter zum Schlagbohren, wo zwar ein Eindringen der Spannbacken in den Bohrerschaft so tief erwünscht ist, dass eine drehschlüssige Mitnahme des Bohrers durch die Spannbacken gewährleistet ist, dann aber ein weiteres Eindringen verhindert werden muss, damit der Bohrer die Möglichkeit behält, relativ zu den Spannbacken geringe Axialbewegungen auszuführen, wie sie beim Schlagbohren zur optimalen Übertragung der Schlagwirkung durch den Bohrer erforderlich sind.

Der Erfindung liegt daher die Aufgabe zugrunde, ein Spannfutter der eingangs genannten Art so auszubilden, dass es nur eine begrenzte Nachspannung ermöglicht und die Spannbackenstellung im nachgespannten Endzustand fixiert werden kann.

Diese Aufgabe wird nach der Erfindung dadurch gelöst, dass zusätzlich zum ersten Sperrglied ein zweites Sperrglied vorgesehen ist, das ebenfalls wie das erste Sperrglied unter der Kraft einer Feder in den Zahnkranz eingreift und durch die Löseeinrichtung in eine mit dem Zahnkranz nicht im Eingriff stehende Stellung verschiebbar ist, das aber umgekehrt wie das erste Sperrglied den Futterkörper und die Spannhülse im Sinne eines Spannens der Spannbacken sperrt, jedoch in dieser Drehrichtung längs eines zunächst eine begrenzte Nachspannung ermöglichenden Drehwinkels durch den Zahnkranz gegen die Kraft einer Rückstellfeder bis gegen einen relativ zum Zahnkranz feststehenden Anschlag mitbewegbar ist.

Das bei dem erfindungsgemässen Spannfutter vorgesehene zweite Sperrglied lässt zum Nachspannen nur einen begrenzten Drehhub der Spannhülse zu. Im anfänglichen Spannzustand steht das zweite Sperrglied in der Ausgangsstellung seines Mitbewegungsweges. Arbeiten sich ausgehend von diesem anfänglichen Spannzustand die Spannbacken in das Werkstück oder Werkzeug ein und lockert sich dadurch dessen Einspannung, so kann das Spannfutter zunächst nachgespannt werden. Dazu muss die Spannhülse im Sinne eines Spannens der Spannbacken verdreht werden, wobei der Zahnkranz das zweite Sperrglied aus seiner Ausgangsstellung mitbewegt, bis dieses gegen die Kraft seiner Rückstellfeder an dem ihm zugeordneten Anschlag festgehalten wird. Erst dadurch kommt die Sperrfunktion dieses Sperrgliedes zur Wirkung. Da es die Spannhülse gegen ein Verdrehen im Sinne eines Spannens sperrt und selbst in dieser Drehrichtung durch den Anschlag aufgehalten wird, ist ein weiteres Spannen des Futters nicht mehr möglich. Jedoch bleibt die erreichte Spannbackenstellung durch das erste Sperrglied gesichert, unabhängig davon, ob sich das Werkzeug oder Werkstück anschliessend wieder etwas an den Spannbacken freiarbeiten und dadurch seine Einspannung erneut entsprechend lockern kann.

Eine bevorzugte Ausführungsform der Erfindung ist dadurch gekennzeichnet, dass die Sperrglieder im wesentlichen senkrecht und exzentrisch zur Futterachse angeordnete, in Längsrichtung unter der Kraft ihrer Feder verschiebbar im Futterkörper geführte Sperrstifte sind und der Zahnkranz an der Spannhülse angeordnet ist, so dass die Sperrstifte, auf den Futterkörper bezogen, von innen nach aussen in den an der inneren Umfangsfläche der Spannhülse angeordneten Zahnkranz drücken, und dass der zweite, die Nachspannung begrenzende Sperrstift im Futterkörper in Umfangsrichtung entsprechend dem Drehwinkel seiner Mitnahme durch den Zahnkranz schwenkbar und in Schwenkrichtung auf der Seite des Anschlages gegen die im wesentlichen quer zur Stiftachse wirkende Rückstellfeder abgestützt ist. Weiter empfiehlt es sich, die Anordnung so zu treffen, dass der zweite die Nachspannung begrenzende Sperrstift mit einem Führungszapfen auf der ihn in den Zahnkranz drückenden, schraubenförmig ausgebildeten Feder sitzt und diese Feder am Boden einer sie und den Sperrstift aufnehmenden Führungsaussparung im Futterkörper abgestützt ist, die sich nach aussen zum Zahnkranz hin in Umfangsrichtung erweitert, wobei das auf der Seite der Rückstellfeder liegende Ende der Führungsaussparung den die Nachspannung begrenzenden Anschlag für den Sperrstift bildet und am gegenüberliegenden Ende der Sperrstift beim Verdrehen der Spannhülse im Sinne eines Lösens der Spannbacken zur Anlage kommt, was letzteres der Ausgangsstellung dieses Sperrstiftes zu Beginn der Nachspannung entspricht. Im einzelnen ist als zweckmässige Ausführungsform vorgesehen, dass die Sperrstifte mit einer von ihrer Stirnfläche und ihrer Umfangsfläche gebildeten Kante in die Verzahnung des Zahnkranzes greifen und von zwei benachbarten Zahnflanken dieser Verzahnung die eine Zahnflanke der Stirnfläche, die andere Zahnflanke der Umfangsfläche der Sperrstifte anliegt, wobei von diesen beiden Zahnflanken, gesehen in der dem Spannen des Futters entsprechenden Drehrichtung des Zahnkranzes, am ersten Sperrstift die nachlaufende Zahnflanke, am zweiten Sperrstift die vorlaufende Zahnflanke jeweils an der Stiftstirnseite anliegt. – In weiterer Ausbildung der Erfindung besteht die Löseeinrichtung aus einem axial neben dem Zahnkranz der Spannhülse angeordneten und ebenfalls koaxial am Futterkörper geführten Lösering, der jedem der beiden Sperrstifte zugeordnete Kulissenflächen aufweist, gegen die die Enden der Sperrstifte anliegen und durch die die Sperrstifte beim Verdrehen des Löseringes gleichzeitig aus dem Eingriff im Zahnkranz zurückdrückbar sind. Zweckmässig ist der Lösering in seinen beiden die Sperrstifte zum Eingriff am Zahnkranz freigebenden oder sie daran hindernden Drehstellungen einrastbar, wozu Rasteinrichtungen zwischen dem Lösering und dem Futterkörper vorgesehen sind.

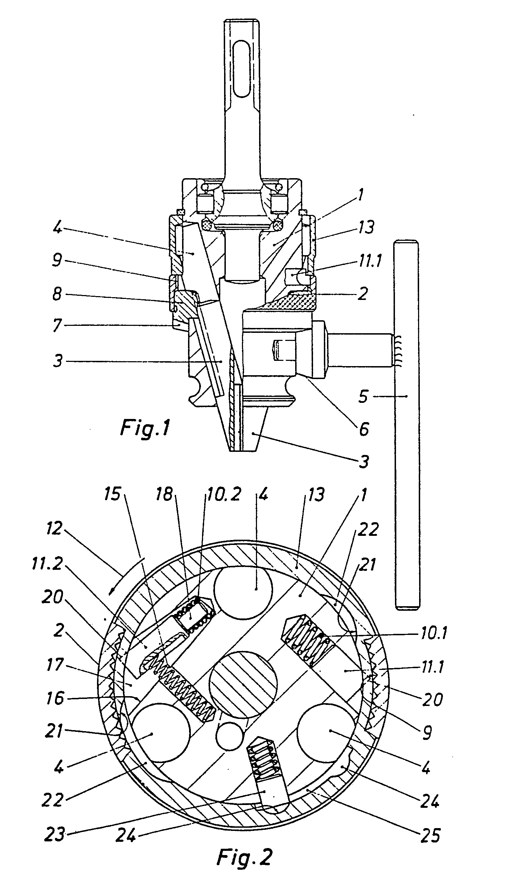

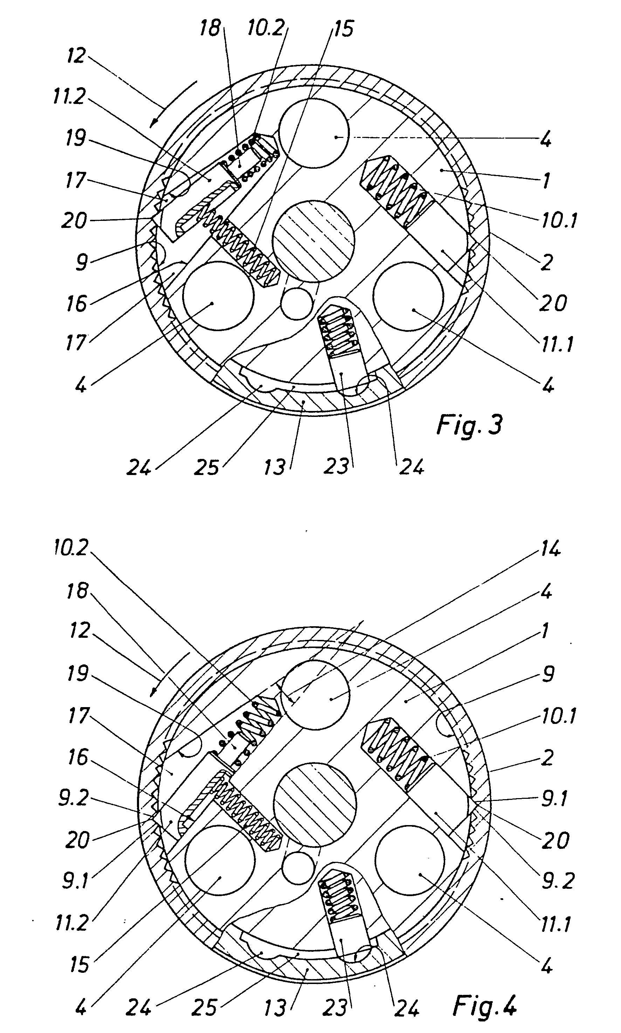

Im folgenden wird die Erfindung an einem in der Zeichnung dargestellten Ausführungsbeispiel näher erläutert. Die Fig. 1 zeigt einen Axialschnitt durch ein Spannfutter nach der Erfindung. Die Fig. 2 bis 4 zeigen Querschnitte durch das Spannfutter nach Fig. 1 in jeweils verschiedenen Betriebszuständen. So sind in Fig. 2 beide Sperrglieder aus ihrem Eingriff am Zahnkranz gelöst, die Spannhülse ist also im Sinne eines Spannens oder Lösens des Spannfutters frei verdrehbar. In den Fig. 3 und 4 sind die Sperrglieder zum Eingriff in den Zahnkranz freigegeben, wobei Fig. 3 den Zustand des Spannfutters zu Beginn des Nachspannens, Fig. 4 am Ende des Nachspannens zeigt.

Bei dem in der Zeichnung dargestellten Bohrfutter ist der Futterkörper mit 1, die daran verdrehbar geführte koaxiale Spannhülse mit 2 bezeichnet. Die Spannbacken 3 laufen in zur Futterachse geneigten Führungen 4 des Futterkörpers 1 und sind zum Spannen und Lösen durch eine Relativbewegung zwischen dem Futterkörper 1 und der Spannhülse 2 verstellbar. Zum Verdrehen der Spannhülse 2 kann an den Futterkörper 1 ein Spannschlüssel 5 angesetzt werden, dessen Zahnritzel 6 in eine Aussenverzahnung 7 eines fest mit der Spannhülse 2 verbundenen Stellringes 8 greift. Zwischen dem Futterkörper 1 und der Spannhülse 2 ist eine Sperreinrichtung vorgesehen, die aus einem zur Futterachse koaxialen Zahnkranz 9 einerseits und einem unter der Kraft der Feder 10.1 in den Zahnkranz 9 eingreifenden Sperrstift 11.1 andererseits besteht. Der Sperrstift 11.1 sperrt den Futterkörper 1 und die Spannhülse 2 gegen Relativbewegungen im Sinne eines Lösens der Spannbacken 3, lässt aber Relativbewegungen im Sinne ihres Spannens unbehindert. In der Zeichnung ist die dem Spannen des Futters entsprechende Drehrichtung des Zahnkranzes 9, bezogen auf den Futterkörper 1, durch die Pfeile 12 angedeutet. Im übrigen dient ein koaxial am Futterkörper 1 drehbar gelagerter Lösering 13 dazu, den der Innenfläche des Löseringes 13 anliegenden Sperrstift 11.1 entsprechend Fig. 2 aus seinem Eingriff im Zahnkranz 9 gegen die Kraft der Feder 10.1 zurückzudrücken, so dass der Sperrstift 11.1 funktionslos wird und das Futter gelöst werden kann. Zusätzlich zu diesem ersten Sperrstift 11.1 ist ein zweiter Sperrstift 11.2 vorgesehen, der ebenfalls wie der erste Sperrstift 11.1 unter der Kraft einer Feder 10.2 in den Zahnkranz 9 eingreift (Fig. 3 und 4) und durch den Lösering 13 in eine mit dem Zahnkranz 9 nicht im Eingriff stehende Stellung verstellbar ist (Fig. 2). Jedoch ist dieser zweite Sperrstift 11.2 so angeordnet, dass er nicht wie der erste Sperrstift 11.1 den Futterkörper 1 und die Spannhülse 2 im Sinne eines Lösens der Spannbacken 3, sondern umgekehrt im Sinne eines Spannens der Spannbacken 3 sperrt. Allerdings ist dieser zweite Sperrstift 11.2 in dieser dem Spannen entsprechenden Drehrichtung (Pfeil 12) des Zahnkranzes 9 längs eines zunächst eine begrenzte Nachspannung ermöglichenden in Fig. 4 bis 14 angedeuteten Drehwinkels durch den Zahnkranz 9 gegen die Kraft einer Rückstellfeder 15 bis gegen einen relativ zum Zahnkranz 9 feststehenden Anschlag 16 mitbewegbar. Der zweite Sperrstift 11.2 sperrt also das nachspannende Verdrehen des Zahnkranzes 9 erst, nachdem er am Anschlag 16 zur Anlage gekommen ist und somit der weiteren Drehung des Zahnkranzes 9 nicht mehr zu folgen vermag.

Im einzelnen sind die Sperrstifte 11.1, 11.2 im wesentlichen senkrecht und exzentrisch zur Futterachse angeordnet und in ihrer Längsrichtung geführt, wobei sie in der Richtung dieser ihrer Führung unter der Kraft der Federn 10.1, 10.2 verschiebbar sind. Der Zahnkranz 9 ist an der Spannhülse 2 angeordnet, so dass die Sperrstifte 11.1, 11.2, auf den Futterkörper 1 bezogen, von innen nach aussen in den an der inneren Umfangsfläche der Spannhülse 2 angeordneten Zahnkranz 9 drücken. Der zweite, die Nachspannung begrenzende Sperrstift 11.2 ist in einer Führungsaussparung 17 im Futterkörper 1 angeordnet, in der er in Umfangsrichtung des Futterkörpers 1 entsprechend dem Drehwinkel 14 seiner Mitnahme durch den Zahnkranz 9 schwenkbar und in Schwenkrichtung auf der Seite des Anschlages 16 gegen die im wesentlichen quer zur Stiftachse wirkende Rückstellfeder 15 abgestützt ist. Er sitzt mit einem Führungszapfen 18 auf der Feder 10.2, die dazu als Schraubenfeder ausgebildet ist. Diese Feder 10.2 ist ihrerseits am Boden der sie und den Sperrstift 11.2 aufnehmenden Führungsaussparung 17 abgestützt und bildet dabei zugleich eine Art Schwenkgelenk für den Sperrstift 11.2. Die Führungsaussparung 17 erweitert sich nach aussen zum Zahnkranz 9 hin in Umfangsrichtung entsprechend dem für den Sperrstift 11.2 erforderlichen Schwenkbereich. Das auf der Seite der Rückstellfeder 15 liegende Ende der Führungsaussparung 17 bildet den die Nachspannung begrenzenden Anschlag 16. Am gegenüberliegenden Ende 19 der Führungsaussparung 17 kommt der Sperrstift 11.2 beim Verdrehen der Spannhülse 2 im Sinne eines Lösens der Spannbacken 3 unter der Kraft der Rückstellfeder 15 zur Anlage. Diese Stellung entspricht etwa der Ausgangsstellung des Sperrstiftes zu Beginn der Nachspannung (Fig. 3).

Die Sperrstifte 11., 11.2 greifen mit einer von ihrer Stirnfläche und ihrer Umfangsfläche gebildeten Kante 20 in die Verzahnung des Zahnkranzes 9. Von dieser Verzahnung liegen jeweils zwei benachbarte Zahnflanken 9.1, 9.2 den Sperrstiften 11.1, 11.2 an, und zwar mit der einen Zahnflanke der Stirnfläche mit der anderen Zahnflanke der Umfangsfläche der Sperrstifte. Von diesen jeweils beiden Zahnflanken 9.1, 9.2 liegt, gesehen in der dem Spannen des Futters entsprechenden Drehrichtung des Zahnkranzes (Pfeil 12) am ersten Sperrstift 11.1 die jeweils nachlaufende Zahnflanke 9.2, am zweiten Sperrstift 11.2 die jeweils vorlaufende Zahnflanke 9.1 an der Stiftstirnseite an. Wird daher der Zahnkranz 9 im Sinne eines Spannens des Futters gedreht (Pfeil 12), vermag die der Stirnseite des ersten Sperrstiftes 11.1 anliegende Zahnflanke 9.2 diesen Sperrstift gegen die Kraft seiner Feder 10.1 einwärts zu drücken, so dass die Zahnflanke 9.2 den Sperrstift 11.1 passieren kann und der Sperrstift 11.1 das Verdrehen des Zahnkranzes 9 in dieser Richtung nicht behindert. In der entgegengesetzten Drehrichtung liegt dagegen die Zahnflanke 9.1 der Umfangsfläche des Sperrstiftes 11.1 an, so dass diese Zahnflanke 9.1 den Sperrstift senkrecht zu seiner Führungsrichtung beaufschlagt, der Sperrstift also dieser Zahnflanke nicht ausweichen kann. In dieser dem Pfeil 12 entgegen gesetzten Drehrichtung ist somit der Zahnkranz 9 durch den Sperrstift 11.1 gesperrt. Am zweiten Sperrstift 11.1 liegen die Verhältnisse genau umgekehrt, was somit keiner weiteren Beschreibung im einzelnen bedarf.

Der Lösering 13 besitzt jedem der beiden Sperrstifte 11.1, 11.2 zugeordnete Kulissenflächen 21, gegen welche die Enden der Sperrstifte anliegen und durch die die Sperrstifte beim Verdrehen des Löseringes 13 gleichzeitig aus dem Eingriff im Zahnkranz 9 zurückgedrückt werden, wie es Fig. 1 zeigt. In der in den Fig. 2 und 3 erkennbaren Drehstellung des Löseringes 13 können dagegen die Sperrstifte 11.1, 11.2 in die innenseitigen Randausnehmungen 22 der Kulissenflächen 21 des Löseringes 13 eintreten, so dass sie in den Zahnkranz 9 eingreifen können. In beiden Drehstellungen ist der Lösering 13 durch ein im Futterkörper 1 vorgesehenes federndes Rastglied 23 gehalten, das in entsprechende Rastausnehmungen 24 auf der Innenseite des Löseringes 13 eingreift. In jedem Fall bleibt das Rastglied 23 beim Verdrehen des Löseringes 13 in einer die beiden Rastausnehmungen 24 verbindenden Nut 25, wodurch der Lösering 13 gegen Axialverstellungen auf dem Futterkörper 1 gesichert ist.

**Patentansprüche**

1. Spannfutter, insb. Bohrfutter, mit einem Futterkörper (1), einer daran verdrehbar geführten koaxialen Spannhülse (2), mit Spannbacken (3), die zum Spannen und Lösen durch eine Relativdrehung zwischen dem Futterkörper (1) und der Spannhülse (2) verstellbar sind, und mit einer zwischen dem Futterkörper (1) und der Spannhülse (2) vorgesehenen Sperreinrichtung aus einem zur Futterachse koaxialen Zahnkranz (9) einerseits und einem unter der Kraft der Feder (10.1) in den Zahnkranz (9) eingreifenden Sperrglied andererseits, das den Futterkörper (1) und die Spannhülse (2) gegen Relativdrehungen im Sinne eines Lösens der Spannbacken (3) sperrt, Relativdrehungen im Sinne eines Spannens aber ungehindert lässt, und das durch eine Löseeinrichtung von aussen in eine mit dem Zahnkranz (9) nicht im Eingriff stehende Stellung verstellbar ist, dadurch gekennzeichnet, dass zusätzlich zum ersten Sperrglied ein zweites Sperrglied vorgesehen ist, das ebenfalls wie das erste Sperrglied unter der Kraft der Feder (10.2) in den Zahnkranz (9) eingreift und durch die Löseeinrichtung in eine mit dem Zahnkranz (9) nicht im Eingriff stehende Stellung verstellbar ist, das aber umgekehrt wie das erste Sperrglied den Futterkörper (1) und die Spannhülse (2) im Sinne eines Spannens der Spannbacken (3) sperrt, jedoch in dieser Drehrichtung längs eines zunächst eine begrenzte Nachspannung ermöglichenden Drehwinkels (14) durch den Zahnkranz (9) gegen die Kraft einer Rückstellfeder (15) bis gegen einen relativ zum Zahnkranz (9) feststehenden Anschlag (16) mitbewegbar ist.

2. Spannfutter nach Anspruch 1, dadurch gekennzeichnet, dass die Sperrglieder im wesentlichen senkrecht und exzentrisch zur Futterachse angeordnete, in Längsrichtung unter der Kraft ihrer Federn (10.1, 10.2) verschiebbar im Futterkörper (1) geführte Sperrstifte (11.1, 11.2) sind und der Zahnkranz (9) an der Spannhülse (2) angeordnet ist, so dass die Sperrstifte (11.1, 11.2), auf den Futterkörper (1) bezogen, von innen nach aussen in den an der inneren Umfangsfläche der Spannhülse (2) angeordneten Zahnkranz (9) drücken, und dass der zweite, die Nachspannung begrenzende Sperrstift (11.2) im Futterkörper (1) in Umfangsrichtung entsprechend dem Drehwinkel (14) seine Mitnahme durch den Zahnkranz (9) schwenkbar und in Schwenkrichtung auf der Seite des Anschlages (16) gegen die im wesentlichen quer zur Stiftachse wirkende Rückstellfeder (15) abgestützt ist.

3. Spannfutter nach Anspruch 2, dadurch gekennzeichnet, dass der zweite, die Nachspannung begrenzende Sperrstift (11.2) mit einem Führungszapfen (18) auf der ihn in den Zahnkranz (9) drückenden und schraubenförmig ausgebildeten Feder (10.2) sitzt und diese Feder am Boden einer sie und den Sperrstift aufnehmenden Führungsaussparung (17) im Futterkörper (1) abgestützt ist, die sich nach aussen zum Zahnkranz (9) hin in Umfangsrichtung erweitert, wobei das auf der Seite der Rückstellfeder (15) liegende Ende der Führungsaussparung (17) den die Nachspannung begrenzenden Anschlag (16) bildet und am gegenüberliegenden Ende (19) der Sperrstift (11.2) beim Verdrehen der Spannhülse (2) im Sinne eines Lösens der Spannbacken (3) zur Anlage kommt.

4. Spannfutter nach den Ansprüchen 2 und 3, dadurch gekennzeichnet, dass die Sperrstifte (11.1, 11.2) mit einer von ihrer Stirnfläche und ihre Umfangsfläche gebildeten Kante (20) in die Verzahnung des Zahnkranzes (9) greifen und von zwei benachbarten Zahnflanken (9.1, 9.2) dieser Verzahnung die eine Zahnflanke der Stirnfläche, die andere Zahnflanke der Umfangsfläche der Sperrstifte (11.1, 11.2) anliegt, wobei von diesen beiden Zahnflanken, gesehen in der dem Spannen des Futters entsprechenden Drehrichtung (Pfeil 12) des Zahnkranzes (9), am ersten Sperrstift (11.1) die nachlaufende Zahnflanke (9.2), am zweiten Sperrstift (11.2) die vorlaufende Zahnflanke (9.1) jeweils an der Stiftstirnseite anliegt.

5. Spannfutter nach einem der Ansprüche 1 bis 4, dadurch gekennzeichnet, dass die Löseeinrichtung aus einem axial neben dem Zahnkranz (9) der Spannhülse (2) angeordneten und ebenfalls koaxial am Futterkörper (1) geführten Lösering (13) besteht, der jedem der beiden Sperrstifte (11.1, 11.2) zugeordnete Kulissenflächen (21) aufweist, gegen die die Enden der Sperrstifte (11.1, 11.2) anliegen und durch die die Sperrstifte beim Verdrehen des Löseringes (13) gleichzeitig aus dem Eingriff im Zahnkranz (9) zurückdrückbar sind.

6. Spannfutter nach Anspruch 5, dadurch gekennzeichnet, dass der Lösering (13) in seinen beiden die Sperrstifte (11.1, 11.2) zum Eingriff am Zahnkranz (9) freigebenden oder sie daran hindernden Drehstellungen einrastbar ist, und dass dazu Rasteinrichtungen (23, 24) zwischen dem Lösering (13) und dem Futterkörper (1) vorgesehen sind.

### Claims

1. A clamping chuck, in particular a drill chuck, with a chuck body (1), a coaxial clamping sleeve (2) ritatably guided on the said chuck body, with clamping jaws (3) which are adjustable for clamping and releasing by relative rotation between the chuck body (1) and the clamping sleeve (2), and with a locking device provided between the chuck body (1) and the clamping sleeve (2), the locking device consisting on the one hand of a toothed rim (9) coaxial to the chuck axis, and on the other hand of a locking member engaging in the toothed rim (9) under the force of a spring (10.1), which locking member locks the chuck body (1) and the clamping sleeve (2) against relative rotations in the direction for releasing the clamping jaws (3), but freely allows relative rotations in the direction of clamping, and is adjustable from the outside into a position of non-engagement with the toothed rim (9) by means of a releasing device, characterised in that in addition to the first locking member, a second locking member is provided, which like the first locking member engages in the toothed rim (9) and is adjustable into a position on non-engagement with the toothed rim (9) by means of a releasing device, but which, unlike the first locking member, locks the chuck body (1) and the clamping sleeve (2) in the direction of clamping of the clamping jaw (3), the second locking member being capable of being moved in this rotational direction along an angle of rotation (14), permitting a limited clamping adjustment, against the force of a centring spring (15) until the said locking member meets a stop (16) which is stationary relative to the toothed rim (9).

2. A clamping chuck according to Claim 1, characterised in that the locking members are locking pins (11.1, 11.2) disposed substantially perpendicularly and excentrically to the chuck axis and guided displaceably in the longitudinal direction in the chuck body (1) under the force of their springs (10.1, 10.2) and the toothed rim (9) is disposed on the clamping sleeve (2) so that the locking pins (11.1, 11.2), with respect to the chuck body (1), press from inside outwards into the toothed rim (9) disposed on the inner circumferential face of the clamping sleeve (2), and that the second locking pin (11.2) limiting the clamping adjustment is pivotably supported in the chuck body (1) in the circumferential direction according to the angle of rotation (14) through which it is moved by the toothed rim (9) and in the pivotal direction on the side of the stop (16) against the centring spring (15) acting substantially transversely to the pin axis.

3. A clamping chuck according to Claim 2, characterised in that the secons locking member (11.2) limiting the clamping adjustment rests with a guide pin (18) on the screw-shaped spring (10.2) pressing the said locking pin into the toothed rim (9) and this spring bears against the bottom of a guide recess (17) in the chuck body (1) receiving the spring and the locking pin, the guide recess widening in the circumferential direction outwards towards the toothed rim (9), in which case the end of the guide recess (17) lying on the side of the centring spring (15) forms the stop limiting any clamping adjustment whilst the opposite end (19) abuts the locking pin (11.2) when the clamping sleeve (2) rotates in the direction for releasing the clamping jaws (3).

4. A clamping chuck according to Claims 2 and 3, characterised in that an edge (20) of the locking pins (11.1, 11.2) formed by their end face and their circumferential face engages in the toothing of the toothed rim (9) and, of two adjacent tooth flanks (9.1, 9.2) of the said toothing, the one tooth flank abuts the end face, the other tooth flank abuts the circumferential face of the locking pins (11.1, 11.2), in which case, of these two tooth flanks, seen in the rotational direction (arrow 12) of the toothed rim (9) corresponding to the clamping of the chuck, the trailing tooth flank (9.2) abuts the end face of the first locking pin (11.1) and the leading tooth flank (9.1) abuts the end face of the second locking pin (11.2).

5. A clamping chuck according to one of Claims 1 to 4, characterised in that the releasing device consists of a release ring (13) disposed axially adjacent to the toothed rim (9) of the clamping sleeve (2) and also guided coaxially on the chuck body (1), the release ring having slide faces (21) associated with each of the two locking pins (11.1, 11.2), the ends of the locking pins (11.1, 11.2) abutting the slide faces an the locking pins being pressed back out of engagement with the toothed rim (9) by the said slide faces simultaneously with the rotation of the release ring (3).

6. A clamping chuck according to Claim 5, characterised in that the release ring (13) is engageable in its two rotational positions for releasing the locking pins (11.1, 11.2) for engagement or preventing their engagement with the toothed rim (9), and in that engaging devices (23, 24) for this purpose are provided between the release ring (13) and the chuck bodies (1).

Revendications

1. Mandrin de serrage, notamment mandrin porte-foret comportant un corps (1), une douille coaxiale de serrage (2) guidée de manière à pouvoir tourner sur ce corps, des mâchoires de serrage (3) déplaçables pour réaliser le serrage et desserrage grâce à un mouvement de rotation relative entre le corps (1) du mandrin et la douille de serrage (2), et un dispositif de blocage prévu entre le corps (1) du mandrin et la douille de serrage (2) et constitué d'une part par une couronne dentée (9) coaxiale à l'axe du mandrin et d'autre part par un organe de blocage, qui s'engage dans la couronne dentée (9) sous l'action de la force d'un ressort (10.1), bloque le corps (1) du mandrin et la douille de serrage (2) contre des rotations relatives dans le sens d'un desserrage des mâchoires de serrage (3), mais autorise des rotations relatives dans le sens d'un serrage et peut être amené de l'extérieur, au moyen d'un dispositif de desserrage, dans une position dégagée de la couronne dentée (9), caractérisé en ce qu'il est prévu en plus du premier organe de blocage un second organe de blocage qui, de même que le premier organe de blocage, s'engage dans la couronne dentée (9) sous l'action de la force d'un ressort (10.2), peut être amené au moyen du dispositif de desserrage dans une position dégagée de la couronne dentée (9), mais, contrairement au premier organe de blocage, bloque le corps (1) du mandrin et la douille de serrage (2) dans le sens d'un serrage des mâchoires de serrage (3), et peut être entraîné conjointement, dans ce sens de rotation, au moyen de la couronne dentée (9), sur un angle de rotation (14) permettant tout d'abord un serrage complémentaire limité, à l'encontre de la force d'un ressort de rappel (15), jusque contre une butée (13) fixe par rapport à la couronne dentée (9).

2. Mandrin de serrage selon la revendication 1, caractérisé en ce que les organes de blocage sont des tiges de blocage (11.1, 11.2) disposées sensiblement perpendiculairement et en étant excentrées par rapport à l'axe du mandrin et guidées de manière à être déplaçables dans le corps (1) du mandrin, dans la direction longitudinale, sous l'action de la force de leurs ressorts (10.1, 10.2), et que la couronne dentée (9) est disposée sur la douille de serrage (2) de sorte que les tiges de blocage (11.1, 11.2) appliquent une pression de l'intérieur vers l'extérieur, rapportée au corps (1) du mandrin, à la couronne dentée (9) disposée sur la surface périphérique intérieure de la douille de serrage (2), et que la seconde tige de blocage (11.2) limitant le serrage complémentaire peut pivoter dans le corps (1) du mandrin dans la direction circonférentielle, conformément à l'angle de rotation (14) de son entraînement sous l'effet de la couronne dentée (9) et s'applique dans la direction de pivotement, du côté de la butée (16), contre le ressort de rappel (15) agissant sensiblement transversalement par rapport à l'axe de la tige.

3. Mandrin de serrage selon la revendication 2, caractérisé en ce que la seconde tige de blocage (11.2), qui limite le serrage complémentaire, s'appuie par un téton de guidage (18) sur le ressort (10.2) qui repousse la tige dans la couronne dentée (9) et est réalisé avec une forme hélicoïdale, et que ce ressort s'appuie sur le fond d'un évidement de guidage (17), qui reçoit ce ressort et la tige de blocage, est ménagé dans le corps (1) du mandrin et s'élargit vers l'extérieur dans la direction périphérique en direction de la couronne dentée (9), l'extrémité de l'évidement de guidage (17) située du côté du ressort de rappel (15) formant la butée (16) limitant le serrage complémentaire, tandis que la tige de blocage (11.2) vient s'appliquer contre l'extrémité opposée (19), lors de la rotation de la douille de serrage (2), dans le sens d'un desserrage des mâchoires de serrage (3).

4. Mandrin de serrage selon les revendications 2 et 3, caractérisé en ce que les tiges de blocage (11.1, 11.2) s'engagent par une arête (20) formée par leur surface frontale et leur surface périphérique, dans la denture de la couronne dentée (9) et qu'un premier flanc faisant partie de deux flancs voisins (9.1, 9.2) de dents de cette denture s'applique contre la surface frontale tandis que le second flanc de dent s'applique contre la surface enveloppe des tiges de blocage (11.1, 11.2), auquel cas parmi ces deux flancs de dents, lorsqu'on regarde dans le sens de rotation (flèche 12) de la couronne dentée (9), qui correspond au serrage du mandrin, le flanc de dent arrière (9.2) s'applique respectivement contre la face frontale de la première tige de blocage (11.1) tandis que le flanc de dent avant (9.1) s'applique contre la face frontale de la seconde tige de blocage (11.2).

5. Mandrin de serrage selon l'une des revendications 1 à 4, caractérisé en ce que le dispositif de desserrage est constitué par une bague de desserrage (13), qui est disposée axialement entre la couronne dentée (9) de la douille de serrage (2), est également guidée coaxialement sur le corps (1) du mandrin et possède des surfaces de coulisse (21) qui sont associées à chacune des deux tiges de blocage (11.1, 11.2) et contre lesquelles les extrémités des tiges de blocage (11.1, 11.2) s'appliquent et au moyen desquelles ces tiges de blocage peuvent être repoussées simultanément en arrière, en étant dégagées de la couronne dentée, lors de la rotation de la bague de desserrage (13).

6. Mandrin de serrage selon la revendication 5, caractérisé en ce que la bague de desserrage (13) peut s'encliqueter dans ses deux positions en rotation, dans lesquelles elle libère une tige de blocage (11.1, 11.2) pour leur permettre de s'engager dans la couronne dentée (9) ou bien dans lesquelles elle empêche cet engrènement, et qu'à cet effet il est prévu des dispositifs d'encliquetage (23, 24) disposés entre la bague de desserrage (13) et le corps (1) du mandrin.

Fig.1

Fig.2

Fig. 3

Fig. 4